# EUROPÄISCHE PATENTSCHRIFT

(11) **EP 0 636 957 B1**
(45) Veröffentlichungstag und Bekanntmachung des Hinweises auf die Patenterteilung: **15.01.1997**
(21) Anmeldenummer: 94111320.1
(22) Anmeldetag: 20.07.1994
(51) Int. Cl.: G05B 19/4093, G05B 19/18

(54) **Verfahren zum Bearbeiten von Programmen numerischer Werkzeugmaschinen-Steuerungen**
Method for program processing concerning numerically controlled machine tools
Procédé à usiner des programmes pour machine-outils à commande numérique

(30) Priorität: 30.07.1993 DE 4325691
(43) Veröffentlichungstag der Anmeldung: 01.02.1995
(73) Patentinhaber: SIEMENS AKTIENGESELLSCHAFT, 80333 München (DE)
(72) Erfinder: Höhn, Georg, D-91301 Forchheim (DE); Schmitt, Regina, D-91074 Herzogenaurach (DE)

(56) Entgegenhaltungen:
- EP-A- 0 107 794
- DE-A- 3 410 430
- GB-A- 2 192 471

## Beschreibung

Die in numerisch gesteuerten Werkzeugmaschinen verarbeiteten Programme weisen sogenannte Teileprogramme oder Bewegungssätze auf, welche neben den nach DIN 66025 definierten Funktionen Hochsprachen-Anweisungen mit symbolischen Bezeichnern enthalten. Ein solcher Teileprogrammsatz hat z. B. die Form G01 X10 Y20 F1000, womit bestimmt wird, daß in linearer Bewegung zur Position X = 10, Y = 20 mit der Vorschubgeschwindigkeit 1000 gefahren wird. Diese DIN- und Hochsprachen-Anweisungen sind nach einer festgeschriebenen Syntax zu programmieren.

Der vorliegenden Erfindung liegt die Aufgabe zugrunde, ein Verfahren zum Bearbeiten von Programmen numerisch gesteuerter Werkzeugmaschinen anzugeben, mit dem Syntax-Fehler so früh wie möglich erkannt werden und die Abarbeitung der Teileprogramme sehr schnell erfolgt.

Erfindungsgemäß wird diese Aufgabe mit den im Anspruch 1 angegebenen Merkmalen gelöst.

Nach dem neuen Verfahren übersetzt ein inkrementeller Compiler die normierten Anweisungen, z. B. nach DIN 66025, und die Hochsprachen-Anweisungen in bearbeitungsoptimale binäre Zwischengrößen. Diese können Binärworte von z. B. 16 Bit bzw. zwei- oder auch dreistellige Dezimalzahlen sein. Die Übersetzung wird satzweise durchgeführt. Sie kann sowohl offline, z. B. gleichzeitig mit dem Editieren erfolgen, als auch online während der Abarbeitung des Programms. Der Testbetrieb und das Editieren geschieht jedoch in gewohnter Weise auf der Basis des vom Anwender erstellten Programms, das im allgemeinen im sogenannten ASCII-Format vorliegt.

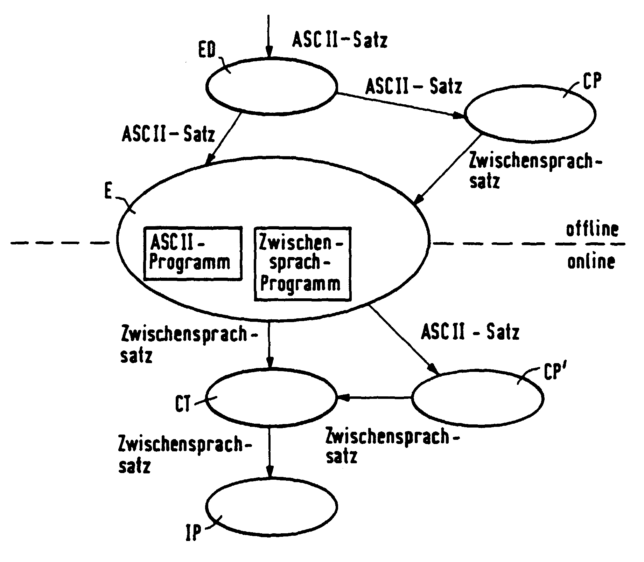

Anhand der Zeichnung werden im folgenden die Erfindung sowie Weiterbildungen und Ergänzungen näher beschrieben und erläutert.

Das Programm wird im ASCII-Code einem Editor ED zugeführt, von dem es überarbeitet und auf Plausibilität geprüft werden kann. Syntaxfehler können somit frühzeitig direkt bei der Eingabe erkannt werden. Im Falle der offline-Verarbeitung wird das Programm bewegungssatzweise in ASCII-Format einem Compiler CP zugeführt, der sie in Binärsignale umsetzt, die von einer Steuerung rasch bearbeitet werden können. Beispielsweise wird der Bewegungssatz G01 x 10 umgesetzt in die Binärzahl in hexadezimaler Darstellung: 〈00DC〉 〈1100〉 〈000A〉 〈0006〉 〈0044〉 〈0003〉. Die einzelnen vierstelligen Zahlen bedeuten je eine Teilanweisung bzw. einen Wert. Die Gesamtheit dieser Binärwörter bildet somit eine bearbeitungsoptimale binäre Zwischensprache. Das durch die Übersetzung entstandene Zwischensprachprogramm wird in eine Datenhaltungseinheit DHE abgelegt, von wo es zur Steuerung einer numerisch gesteuerten Maschine während des Betriebs über einen Controller CT ausgelesen und einem Interpreter IP zugeführt wird, der die Zwischensprachsätze in Maschinensprachsätze umsetzt.

Im Falle einer online-Umsetzung werden die ASCII-Sätze vom Editor ED unmittelbar der Datenhaltungseinheit DHE zugeführt. Von dort werden die Bewegungssätze zur Abarbeitung in einem Compiler CP' in Zwischensprachensätze übersetzt und über den Controller CT dem Interpreter IP zugeführt.

## Patentansprüche

1. Verfahren zum Bearbeiten von aus Bewegungssätzen bestehenden Programmen numerisch gesteuerter Werkzeugmaschinen mit folgenden Merkmalen:
- das Programm wird in einer Hoch- oder genormten Sprache eingegeben und editiert,
- die Bewegungssätze werden einzeln von der Hoch- oder genormten Sprache in Sätze einer binären Zwischensprache umgesetzt,
- die Sätze der binären Zwischensprache werden in Maschinensprachesätze umgesetzt.

2. Verfahren nach Anspruch 1, **dadurch gekennzeichnet,** daß zunächst die Gesamtheit der Bewegungssätze in die ein binären Zwischensprachenprogramm bildenden Sätze übersetzt wird, die dann interpretiert oder in die Maschinensprache umgesetzt werden.

3. Verfahren nach Anspruch 1, **dadurch gekennzeichnet,** daß die Bewegungssätze online übersetzt werden und mit den Sätzen der binären Zwischenspreche die Maschine gesteuert wird.

## Claims

1. Method for processing programs of numerically controlled machine tools, which programs consist of motion records, having the following features:
- the program is input and edited in a high-level language or standardized language;
- the motion records are transposed individually from the high-level language or standardized language into records of a binary intermediate language;
- the records of the binary intermediate language are transposed into machine-language records;

2. Method according to claim 1, characterised in that first of all the whole of the motion records is translated into the records which form a binary intermediate language program, which records are then interpreted or transposed into the machine language.

3. Method according to claim 1, characterised in that the motion records are translated on-line and the machine is controlled with the records of the binary intermediate language.

## Revendications

1. Procédé de traitement de programmes de machines-outils à commande numérique constitués de blocs de mouvement, caractérisé de la manière suivante:
- on entre et on édite le programme en un langage évolué et/ou normalisé,
- on convertit les blocs de mouvement individuellement du langage évolué et/ou normalisé en blocs d'un langage intermédiaire binaire,
- on convertit les blocs du langage intermédiaire binaire en blocs en langage machine.

2. Procédé suivant la revendication 1, caractérisé en ce que l'on traduit d'abord la totalité des blocs de mouvement en les blocs formant un programme en langage intermédiaire binaire, les blocs étant ensuite interprétés ou convertis en le langage machine.

3. Procédé suivant la revendication 1, caractérisé en ce que l'on traduit les blocs de mouvement en simultané et en ce que l'on commande la machine par les blocs du langage intermédiaire binaire.
